# EUROPÄISCHE PATENTANMELDUNG

(11) **EP 4 715 685 A1**
(43) Veröffentlichungstag der Anmeldung: **25.03.2026**
(21) Anmeldenummer: 24202150.9
(22) Anmeldetag: 24.09.2024
(51) Int. Cl.: G06N 5/04, G06F 1/3287

(54) **SYSTEM UND VERFAHREN ZUM AKTIVIEREN VON KOMPONENTEN**

(71) Anmelder: Siemens Aktiengesellschaft, 80333 München (DE)
(72) Erfinder: Jergler, Martin, 85567 Pienzenau (DE); Telschig, Kilian, 81543 München (DE); Winhuysen, Jan, 80469 München (DE)
(74) Vertreter: Siemens Patent Attorneys

(57) **Zusammenfassung**

Die Erfindung betrifft ein System (S) zum Aktivieren von Komponenten (A, B, C, D) vorgeschlagen, wobei das System (S) mehrere Komponenten (A, B, C, D) aufweist, wobei jede der mehreren Komponenten (A, B, C, D) dazu ausgebildet ist, zumindest eine Aufgabe auszuführen, wobei die Komponenten (A, B, C, D) des Weiteren dazu ausgebildet sind, mit anderen Komponenten (A, B, C, D) Nachrichten (E) auszutauschen, um die jeweiligen Aufgaben auszuführen. Das System (S) weist des Weiteren eine Überwachungseinheit (UE), die dazu ausgebildet ist, den Austausch von Nachrichten (E) zwischen den mehreren Komponenten (A, B, C, D) zu überwachen, und eine Starteinheit (SE) auf, die dazu ausgebildet ist, basierend auf dem Austausch von Nachrichten (E) ein Kommunikationsmuster zu detektieren, ein Verhalten der mehreren Komponenten (A, B, C, D) basierend auf dem Kommunikationsmuster vorherzusagen und basierend auf der Vorhersage eine oder mehrere Komponenten (A, B, C, D) in einen aktiven Zustand zu versetzen.

## Beschreibung

Die vorliegende Erfindung betrifft ein System zum Aktivieren von Komponenten. Darüber hinaus betrifft die vorliegende Erfindung ein Verfahren zum Aktivieren von Komponenten. Des Weiteren betrifft die vorliegende Erfindung ein Computerprogrammprodukt, welches auf einer programmgesteuerten Einrichtung die Durchführung des Verfahrens zum Aktivieren von Komponenten veranlasst.

In verteilten Computersystemen erfüllen mehrere Komponenten Aufgaben unabhängig voneinander. Zusammen lösen diese Aufgaben komplexere Probleme oder Prozesse (manchmal auch als Workflows bezeichnet, die aus mehreren Aufgaben oder Aufgabenketten bestehen); sie können auf den Ergebnissen der jeweils anderen aufbauen oder die Verarbeitung parallelisieren. Die Komponenten können auf demselben oder auf mehreren Rechenknoten ausgeführt werden.

Die Komponenten koordinieren die Ausführung ihrer Aufgaben durch den Austausch von Nachrichten (oder Ereignissen) über ein "Event Messaging System" oder einen Vermittler bzw. Broker (z.B. NATS-Broker). Um Kosten, Rechenleistung bzw. Energie zu sparen, sind allerdings nicht alle Komponenten (und damit Knoten) ständig aktiv (auch als "heißer Zustand" bezeichnet). Sie können in einen Standby-Modus (auch als "kalter Zustand" bezeichnet) geschaltet werden und werden bei Bedarf, d. h. beim Empfang einer Nachricht, gestartet. Das Starten einer Komponente oder eines Knotens aus dem Standby-Modus heraus benötigt jedoch Zeit und verzögert daher die Verarbeitung des eigentlichen Workflows.

Komponenten können beispielsweise in serverlosen Funktionen, in virtuellen Containern, in virtuellen Maschinen oder in Cloudstrukturen eingesetzt werden. Sind die Komponenten, oder ein Teil der Komponenten, nicht aktiviert bzw. im Standby-Modus, müssen diese bei Empfang einer eingehenden Nachricht gestartet werden. Befinden sich die Komponenten allerdings dauerhaft im aktivierten Zustand, d. h. nicht im Standby-Betrieb, verbrauchen sie Ressourcen (Geld, Speicher, CPU, Energie usw.), auch wenn keine Nachrichten verarbeitet werden müssen.

Bislang wird bei solchen verteilten Computersystemen akzeptiert, dass das Aufheizen bzw. Reaktivieren einer Komponente einige Zeit in Anspruch nimmt, und dies wird auf Prozess-/ Workflow-Ebene entsprechend gemildert. Alternativ wird eine bestimmte Anzahl von Komponenten als Reserve/Puffer in einem aktiven Zustand gehalten, sodass sie direkt verwendet werden können. Zur Optimierung kann diese Anzahl durch Messung der Auslastung der Komponenten/Knoten angepasst werden.

Unabhängig vom grammatikalischen Geschlecht eines bestimmten Begriffes sind Personen mit männlicher, weiblicher oder anderer Geschlechteridentität mit umfasst.

Vor diesem Hintergrund besteht eine Aufgabe der vorliegenden Erfindung darin, eine Möglichkeit bereitzustellen, in (verteilten) Computersystemen die Ausführung eines Workflows oder allgemein von Aufgaben mit einer geringen Verzögerung zu gewährleisten, während gleichzeitig Energie gespart wird.

Demgemäß wird ein System zum Aktivieren von Komponenten vorgeschlagen, wobei das System mehrere Komponenten aufweist, wobei jede der mehreren Komponenten dazu ausgebildet ist, zumindest eine Aufgabe auszuführen, wobei die Komponenten des Weiteren dazu ausgebildet sind, mit anderen Komponenten Nachrichten auszutauschen, um die jeweiligen Aufgaben auszuführen.

Bei dem System handelt es sich insbesondere um ein verteiltes Computersystem, z.B. ein Cloudsystem oder Softwaresystem mit verteilten Containern, das mehrere Komponenten oder Knoten aufweist. Diese Komponenten können einzelne Aufgaben ausführen, die zusammenwirken und einen Workflow bilden. Wie bereits oben erläutert, können die Komponenten zum Ausführen der jeweiligen Aufgaben Nachrichten austauschen.

Um nun im Gegensatz zu bisherigen Systemen Energie zu sparen und gleichzeitig die Ausführung verschiedener Workflows sicherzustellen, ist in dem hier vorgeschlagenen System vorgesehen, anhand von Kommunikationsmustern der Komponenten herauszufinden, welche Komponenten in einen aktiven Zustand versetzt werden müssen, bevor sie wirklich benötigt werden. Das bedeutet, dass gemäß dem vorgeschlagenen System die für einen Workflow benötigten Komponenten nicht erst dann in einen aktiven Zustand versetzt werden, wenn sie bereits benötigt werden (was zu einer Verzögerung im Workflow führen würde), sondern bereits dann "vorgeheizt" werden, wenn das System absehen kann, dass die entsprechenden Komponenten zur Ausführung eines Workflows in absehbarer Zeit benötigt werden.

Hierzu weist das System eine Überwachungseinheit und eine Starteinheit auf. Die jeweilige Einheit, zum Beispiel Überwachungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuereinheit auf einem Server, einem Hostsystem oder ähnlichem ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die Überwachungseinheit ist dazu ausgebildet, den Austausch von Nachrichten zwischen den mehreren Komponenten des Systems zu überwachen. Hierzu kann die Überwachungseinheit beispielweise in die Kommunikationspfade zwischen den Komponenten zwischengeschaltet sein. Es ist auch möglich, dass der Überwachungseinheit alle Nachrichten, die zwischen Komponenten ausgetauscht werden, ebenfalls übermittelt werden.

Die Starteinheit ist dann dazu ausgebildet, basierend auf dem Austausch von Nachrichten ein Kommunikationsmuster zu detektieren, ein Verhalten der mehreren Komponenten basierend auf dem Kommunikationsmuster vorherzusagen und basierend auf der Vorhersage eine oder mehrere Komponenten in einen aktiven Zustand zu versetzen. Wird eine Komponente in einen aktiven Zustand versetzt, bedeutet dies hier, dass die Komponente in (unmittelbare) Bereitschaft versetzt wird. Im Folgenden wird dies auch als Aktivieren einer Komponente bezeichnet. Hierbei führt die Komponente noch keine Aktionen durch oder wird von dem System, beispielsweise einer vorherigen Komponente, aufgerufen oder ähnliches, sondern wird lediglich aus einem Standby- oder Ruhemodus aufgeweckt und "aufgeheizt" (preheated), so dass sie dann, wenn sie tatsächlich eine Aktion durchführen soll, z.B. eine Aufgabe ausführen soll, bereits aktiv und wach ist.

Da das Aktivieren oder Versetzen in einen aktiven Zustand basierend auf einer Vorhersage über das Verhalten der Komponenten basierend auf dem Kommunikationsmuster erfolgt, kann die Aktivierung oder das Vorheizen der jeweiligen Komponenten zu einem Zeitpunkt erfolgen, an dem die jeweilige Komponente noch nicht aktiv an einem Workflow von Aufgaben beteiligt ist. Vielmehr wird die jeweilige Komponente bereits dann aktiviert (z.B. aus einem Standby-Modus aufgeweckt oder sogar eingeschaltet), wenn nur die Beteiligung der Komponente an einem Workflow oder an der Ausführung von Aufgaben wahrscheinlich ist, basierend auf dem detektierten Kommunikationsmuster.

Auf diese Weise ist es möglich, Verzögerungen in der Ausführung von Aufgaben und Workflows zu reduzieren (da die jeweiligen Komponenten bereits vorab wieder aktiviert werden), während gleichzeitig Energie und sonstige Ressourcen gespart werden können, da Komponenten nicht unnötig aktiviert bleiben müssen.

Gemäß einer Ausführungsform ist die Überwachungseinheit dazu ausgebildet, für eine Nachricht einen Zeitpunkt einer Nachricht und die aussendende Komponente zu erkennen und zu speichern. Des Weiteren kann die Überwachungseinheit dazu ausgebildet sein, für die Nachricht die empfangende Komponente zu erkennen und zu speichern. Darüber hinaus kann die Überwachungseinheit dazu ausgebildet sein, einen Nachrichtentyp der Nachricht zu erkennen und zu speichern. Diese Informationen kann die Überwachungseinheit beispielsweise in einer Tabelle abspeichern. Dies bietet einen umfassenden Überblick über die Nachrichten, die in dem System durch die Komponenten versendet werden. Diese Informationen sind üblicherweise bereits vorhanden und können durch die Überwachungseinheit ausgelesen werden. Des Weiteren kann die Nachricht selbst auch eine eindeutige Identifikationsnummer enthalten.

Gemäß einer weiteren Ausführungsform ist die Überwachungseinheit dazu ausgebildet, Nachrichten von mehreren Komponenten basierend auf Kausalitäten zu korrelieren und für eine Nachricht eine eindeutige Identifikationsnummer der Nachricht und eine Kausalitätsidentifikationsnummer zu speichern, wobei die Kausalitätsidentifikationsnummer angibt, mit welcher Nachricht die Nachricht aufgrund einer Kausalität korreliert ist. Eine Kausalität zwischen Nachrichten gibt hierbei an, in welchem kausalen Zusammenhang zwei Nachrichten auftreten. Insbesondere kann der kausale Zusammenhang hier auch ein zeitlicher Zusammenhang sein. Die Überwachungseinheit kann beispielsweise bestimmen, dass bei Auftreten einer Nachricht als nächstes immer eine bestimmte andere Nachricht auftritt und diese beiden Nachrichten daher miteinander korrelieren. Die Angabe der Kausalitätsidentifikationsnummer gibt für eine Nachricht dann an, mit welcher anderen Nachricht diese korreliert ist. Durch diesen kausalen Zusammenhang kann die Starteinheit dann erkennen, welche Komponente als nächstes aktiviert werden muss, wenn eine bestimmte Nachricht auftritt.

Gemäß einer weiteren Ausführungsform ist die Starteinheit dazu ausgebildet, basierend auf dem Austausch von Nachrichten ein Modell des Nachrichtenaustausches zwischen den mehreren Komponenten zu erstellen. Ein solches Modell kann den Austausch von Nachrichten zwischen Komponenten abbilden und bietet daher einen einfachen Überblick, welche Nachrichten von welchen Komponenten in welcher Reihenfolge üblicherweise versendet werden. Das Modell kann auch darstellen, wenn von einer Komponente Nachrichten an mehrere andere Komponenten versendet werden können, d. h. wenn mehrere Komponenten an einem Workflow beteiligt sind.

Gemäß einer weiteren Ausführungsform ist die Starteinheit dazu ausgebildet, innerhalb der ausgetauschten Nachrichten eine Häufigkeit des Auftretens von Nachrichten zu detektieren und diese in das Modell zu integrieren, um das Kommunikationsmuster zu detektieren. Das Modell kann somit auch angeben, mit welcher Häufigkeit und damit mit welcher Wahrscheinlichkeit nach einer ersten Nachricht eine zweite Nachricht an eine bestimmte Komponente gesendet wurde. Diese Wahrscheinlichkeiten decken somit ab, dass z.B. nach einer ersten Nachricht an eine erste Komponente eine zweite Nachricht folgt, die mit einer ersten Wahrscheinlichkeit an eine zweite Komponente und mit einer zweiten Wahrscheinlichkeit an eine dritte Komponente gesendet wird. Das Modell kann daher auch darstellen, dass nicht immer dieselben Komponenten nacheinander benötigt werden, sondern dass auch andere Reihenfolgen der Komponenten innerhalb eines Workflows möglich sind.

Gemäß einer weiteren Ausführungsform ist die Starteinheit dazu ausgebildet, basierend auf dem Kommunikationsmuster zu bestimmen, welche Komponenten an dem Kommunikationsmuster beteiligt sind, um das Verhalten der mehreren Komponenten vorherzusagen. Insbesondere kann die Starteinheit Kommunikationsmuster für mehrere Workflows bestimmen, wobei an verschiedenen Workflows verschiedene Komponenten beteiligt sein können. Wenn die Starteinheit ein Kommunikationsmuster erkannt hat, kann sie anhand dieses Kommunikationsmusters (d. h. des Versendens und Empfangens von Nachrichten von Komponenten) dann auf einfache Weise erkennen, wie das Verhalten von einer oder mehreren Komponenten im Zuge des Kommunikationsmusters ist. Das heißt die Starteinheit kann, wenn ein bestimmtes Kommunikationsmuster basierend auf zumindest einer Nachricht bestimmt ist, anhand dieses Kommunikationsmusters vorhersagen, welche Komponenten im weiteren Verlauf Nachrichten empfangen und senden werden und daher aktiviert sein müssen. Auf diese Weise kann die Starteinheit auf einfache Weiche bestimmen, welche Komponenten aktiviert werden müssen, falls sie in einem inaktiven Zustand, z.B. Standby-Modus, sind.

Gemäß einer weiteren Ausführungsform ist die Starteinheit dazu ausgebildet, die Nachrichten über einen vordefinierten Zeitraum zu berücksichtigen, um das Modell zu erstellen. Insbesondere kann die Starteinheit dazu ausgebildet sein, den Zeitraum basierend auf einer ausgewählten Genauigkeit der Vorhersage zu bestimmen. Soll die Vorhersage genauer sein, kann die Starteinheit einen längeren Zeitraum berücksichtigen. Auf diese Weise können kleine Abweichungen im Ablauf der Nachrichten durch die höhere Gesamtdatenmenge nicht ins Gewicht fallen. Des Weiteren kann die Starteinheit Nachrichten, die älter als ein vordefinierter Schwellwert sind, unberücksichtigt lassen. Auf diese Weise können ältere Nachrichten, die beispielsweise aufgrund von Änderungen des Systems nicht mehr aktuell sind, bei der Erstellung des Modells ignoriert werden. Dies macht das Modell zuverlässiger und die Vorhersage genauer.

Gemäß einer weiteren Ausführungsform ist die Starteinheit dazu ausgebildet, basierend auf dem Kommunikationsmuster für jeden Nachrichtentyp einen Aktivierungsplan zum Aktivieren der Komponenten zu erstellen und basierend auf dem Aktivierungsplan bei Auftreten eines Nachrichtentyps die entsprechenden Komponenten zu aktivieren. Insbesondere kann die Starteinheit dazu ausgebildet sein, basierend auf dem Aktivierungsplan die entsprechenden Komponenten in einer festgelegten zeitlichen Reihenfolge zu aktivieren. Auf diese Weise kann die Starteinheit bei Auftreten einer ersten Nachricht deren Nachrichtentyp bestimmen (z.B. auslesen) und basierend darauf festlegen, welche Komponenten wann aktiviert werden müssen. Dies ermöglicht einen zuverlässigen Ablauf eines Workflows, der mit der ersten Nachricht beginnt, ohne dass darauf gewartet werden muss, dass die einzelnen benötigten Komponenten dann aktiviert werden, wenn sie bereits aktiv sein sollten. Gleichzeitig kann Energie gespart werden, da Komponenten nicht unnötigerweise aktiv bleiben müssen.

Gemäß einem weiteren Aspekt wird ein Verfahren zum Aktivieren von Komponenten in einem System vorgeschlagen, wobei das System mehrere Komponenten aufweist, wobei jede der mehreren Komponenten zumindest eine Aufgabe ausführt, wobei die Komponenten mit anderen Komponenten Nachrichten austauschen, um die jeweiligen Aufgaben auszuführen. Das Verfahren weist die Schritte auf:
- Überwachen des Austauschs von Nachrichten zwischen den mehreren Komponenten,
- Detektieren eines Kommunikationsmusters basierend auf dem Austausch von Nachrichten,
- Vorhersagen eines Verhaltens der mehreren Komponenten basierend auf dem Kommunikationsmuster, und
- Aktivieren einer oder mehrerer Komponenten basierend auf der Vorhersage des Verhaltens der mehreren Komponenten.

Die für das vorgeschlagene System beschriebenen Ausführungsformen und Merkmale gelten für das vorgeschlagene Verfahren entsprechend. Des Weiteren sollte beachtet werden, dass die Verfahrensschritte in der angegebenen Reihenfolge oder in anderer Reihenfolge oder auch zumindest teilweise gleichzeitig durchgeführt werden.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm eines Systems zum Aktivieren von Komponenten;
- Fig. 2: zeigt ein schematisches Ablaufdiagramm eines Verfahrens zum Aktivieren von Komponenten;
- Fig. 3: zeigt ein schematisches Diagramm eines Ablaufs von Nachrichten in dem System von Fig. 1;
- Fig. 4: zeigt ein Modell des Nachrichtenaustausches in dem System von Fig. 1; und
- Fig. 5: zeigt einen Aktivierungsplan für das System von Fig. 1.

In den Figuren sind gleiche oder funktionsgleiche Elemente mit denselben Bezugszeichen versehen worden, sofern nichts anderes angegeben ist.

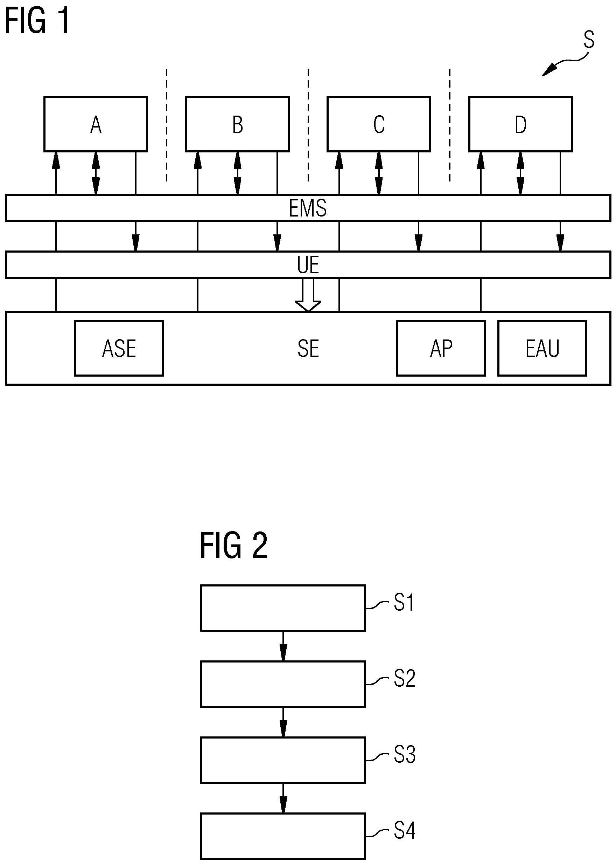

Fig. 1 zeigt ein System S mit mehreren Komponenten A, B, C, D. Das System S kann beispielsweise ein verteiltes Computersystem sein, in dem die Komponenten A bis D jeweils Aufgaben durchführen, um verschiedene Workflows auszuführen. Die Aufgaben der einzelnen Komponenten A bis D können dabei zusammenwirken und voneinander abhängen oder parallel ausgeführt werden.

Zum Durchführen der Aufgaben tauschen die Komponenten A bis D Nachrichten, im Folgenden auch Ereignisse E genannt, aus. Der Austausch dieser Nachrichten E erfolgt über ein Ereignisnachrichtensystem EMS. In bisherigen Systemen war es erforderlich, dass alle Komponenten A bis D dauerhaft aktiv sind, um jederzeit eine Aufgabe ausführen zu können, was jedoch zu einem unnötig hohen Energieverbrauch führt. Alternativ wurde, wenn eine Komponente A bis D in einem Ruhezustand oder Standby-Modus war, diese erst dann aktiviert, wenn sie tatsächlich benötigt wurde, was zu einer Verzögerung in der Ausführung des entsprechenden Workflows führt.

Um nun eine verbesserte Ausführung von Workflows, mit geringerer Verzögerung und geringerem Energieverbrauch, zu ermöglichen, weist das hier beschriebene System S eine Überwachungseinheit UE auf. Diese Überwachungseinheit UE zeichnet auf, wann Ereignisse bzw. Nachrichten E von welcher Komponente A bis D empfangen werden. Eine Starteinheit SE bestimmt basierend darauf ein Kommunikationsmuster der Nachrichten E. Hierzu kann die Starteinheit SE beispielsweise eine Ereignisanalyseeinheit EAU aufweisen.

Diese Ereignisanalyseeinheit EAU kann die Nachrichten bzw. Ereignisse E mittels Kausalitätsinformationen korrelieren. Das bedeutet, dass jedes Ereignis E eine systemweit eindeutige ID hat und zusätzlich eine Kausalitäts-ID trägt, d. h. die ID des Ereignisses E, das die Veröffentlichung oder Ausführung dieses Ereignisses E verursacht hat.

In dem Verfahren, wie es durch das System S durchgeführt wird, wird also in einem ersten Schritt S1 der Austausch von Nachrichten bzw. Ereignissen E zwischen den mehreren Komponenten A bis D durch die Überwachungseinheit UE überwacht. Durch die Starteinheit SE wird dann in Schritt S2 das Kommunikationsmuster basierend auf dem Austausch von Nachrichten E detektiert.

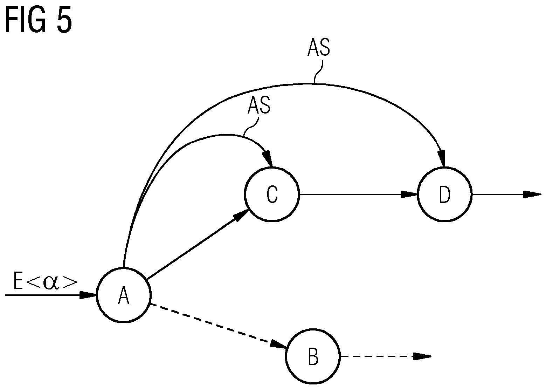

Die Starteinheit SE kann anschließend basierend auf dem Kommunikationsmuster ein Verhalten der mehreren Komponenten A bis D in Schritt S3 vorhersagen. Schließlich kann die Starteinheit SE eine oder mehrere Komponenten A bis D, je nach Bedarf und basierend auf der Vorhersage des Verhaltens der mehreren Komponenten A bis D aktivieren. Dies kann beispielsweise basierend auf einem Aktivierungsplan AP erfolgen. Eine Aktivierungssignaleinheit ASE der Starteinheit SE kann entsprechende Aktivierungssignale AS (siehe Fig. 5) versenden, um die entsprechenden Komponenten A bis D zu aktivieren.

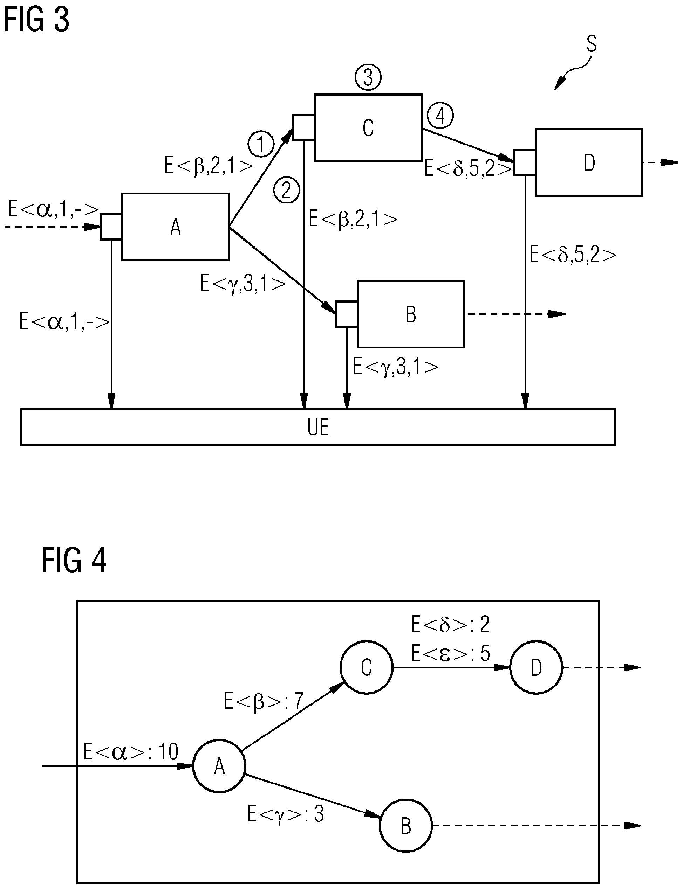

Fig. 3 zeigt die Komponenten A bis D der Fig. 1 mit der zwischen ihnen stattfindenden logischen Kommunikation. Hier werden Ereignisse bzw. Nachrichten E als Tripel aus <Ereignistyp, Ereignis-ID, Ursachen-ID> notiert. Der Ereignistyp α, β, γ, *δ* ist ein Identifikator für die Art der Nachricht, die Ereignis-ID 1 bis 5 ist eine systemweit eindeutige ID für das Ereignis und die Ursachen-ID 1, 2 ist die ID des Ereignisses, das die Komponente A bis D dazu veranlasst hat, das entsprechende Ereignis zu veröffentlichen.

Auf diese Weise kann die Abfolge im Kommunikationsprozess zusammen mit der Rückverfolgung beschrieben werden. Die Abfolge sieht in dem in Fig. 3 dargestellten Beispiel wie folgt aus:
(1). Komponente A beendet ihre Verarbeitung und veröffentlicht ein Ereignis vom Typ β. Dieses Ereignis erhält die systemweit eindeutige ID 2. Da die Komponente A zuvor durch das Ereignis E(α,1,-) mit der ID 1 ausgelöst wurde, wird dem Ereignis die Ursachen-ID 1 zugewiesen, wodurch E(β, 2,1) generiert wird.
(2). Wenn das Ereignis E(β, 2,1) von der Komponente C empfangen wird, wird dies der Überwachungseinheit UE gemeldet. Die Überwachungseinheit UE zeichnet die Zeit, die meldende Komponente und natürlich das Ereignis E(β, 2, 1) selbst auf.
(3). Die Komponente C verarbeitet das Ereignis in einer Aufgabe (nicht weiter dargestellt).
(4). Als Ergebnis der Verarbeitung der Komponente C wird ein neues Ereignis veröffentlicht. Dieses hat nun den Typ δ, die ID 5 und die Ursachen-ID 2 (da dies das Ereignis war, das die Komponente C ausgelöst hat), daher wird E(δ, 5, 2) generiert.

Dieser Prozess wird für jedes Ereignis wiederholt, das von einer der Komponenten A bis D innerhalb des Systems S verarbeitet wird.

Der Beginn eines Workflows (d. h. einer Folge von Ereignissen bzw. Nachrichten) wird meistens durch etwas außerhalb des Systems S ausgelöst. Diese Auslöser haben keine ID, die als Ursachen-ID verwendet werden kann, und daher bleibt dieses Feld leer (siehe Anfangsereignis in Fig. 3).

Für den in Fig. 3 dargestellten Workflow zeichnet die Überwachungseinheit die Nachrichten bzw. Ereignisse in einer Tabelle auf:

| Zeitstempel | Empfangende Komponente | Ereignistyp | Ereignis-ID | Ursachen-ID |
|---|---|---|---|---|
| 12:00:01 | A | α | 1 | - |
| 12:00:02 | B | β | 2 | 1 |
| 12:00:02 | C | *δ* | 3 | 1 |
| 12:00:03 | D | *γ* | 5 | 2 |

In dieser Tabelle können die Informationen über das Ereignis (Ereignistyp, Ereignis-ID, Ursachen-ID) durch die Komponente, die das Ereignis empfängt (Empfänger), und einen Zeitstempel (Zeitstempel) ergänzt werden, wenn die Komponente A bis D das Ereignis empfängt. Optional kann die Tabelle auch die sendende Komponente enthalten.

Wie oben in Bezug auf Fig. 1 beschrieben, kann die Starteinheit SE die von der Überwachungseinheit UE gesammelten Kommunikationsdaten verarbeiten und kann dann anhand des ermittelten Kommunikationsmusters das Verhalten des Systems S vorhersagen. Mit diesem Wissen kann die Starteinheit SE den Komponenten A bis D signalisieren, in einen aktiven Zustand zu wechseln (Aktivierungssignale AP).

Für die Vorhersage kann die Starteinheit SE basierend auf den Daten der Überwachungseinheit UE ein Modell erstellen, wie es beispielsweise in Fig. 4 gezeigt ist. Für jeden Ereignistyp α, β, γ, *δ* aggregiert die Starteinheit SE die Häufigkeit des Auftretens nachfolgender Ereignisse zusammen mit den Komponenten A bis D, die diese empfangen.

In dem in Fig. 4 gezeigten Beispiel wird das Ereignis E<α> zehnmal veröffentlicht. In sieben Fällen wurde das Ereignis E<β> veröffentlicht und von Komponente C verarbeitet. In drei Fällen wurde das Ereignis E<γ> veröffentlicht und von Komponente B verarbeitet. In den sieben Fällen, in denen C das Ereignis E<β> verarbeitet, wird das Ereignis E<δ> zweimal und das Ereignis E<ε> fünfmal veröffentlicht. Beide werden von der Komponente D verarbeitet. Die gestrichelten Linien nach den Komponenten B und D stellt dar, dass der Verlauf danach in diesem Fall nicht mehr berücksichtigt wird.

Der Aufbau des Modells von Fig. 4 kann wie folgt durchgeführt werden:
1. Es wird gespeichert, welche Komponente welchen Ereignistyp verarbeitet. Diese Information gibt an, welche Komponenten aktiv sein müssen, damit ein bestimmter Ereignistyp und dessen Workflow reibungslos und ohne Wartezeit verarbeitet werden kann.
2. Für den vorhergehenden Ereignistyp (der mit Hilfe der Ursachen-ID bestimmt wird) wird gespeichert, dass der Ereignistyp ein nachfolgender Ereignistyp ist. Des Weiteren wird die Häufigkeit des Auftretens dieses Ereignistyps gespeichert. Damit ist immer klar, welche Ereignistypen als Nächstes verarbeitet bzw. ausgegeben werden, wenn ein bestimmter Ereignistyp eingeht, zusammen mit der Häufigkeit eines anderen Ereignistyps. Diese Informationen können zur Berechnung von Wahrscheinlichkeiten für die nachfolgenden Ereignistypen eines bestimmten Ereignistyps verwendet werden.

Zusammen können beide Informationen verwendet werden, um einen Baum wie in der folgenden Figur aufzubauen.

Dann wird für jeden bekannten Ereignistyp ein Aktivierungsplan AP erstellt. Für jeden nachfolgenden Ereignistyp eines bestimmten Typs werden dabei die zugehörigen Komponenten A bis D für den nachfolgenden Typ als vorgeheizt oder aktiviert markiert (d. h. in den aktiven Modus versetzt), wenn die berechneten Wahrscheinlichkeiten einen vordefinierten Schwellenwert überschreiten.

Ein solcher Aktivierungsplan ist in Fig. 5 beispielhaft dargestellt. Dieser basiert auf dem Modell von Fig. 4.

Wenn ein Ereignis vom Typ E<α> eingeht, beträgt die Wahrscheinlichkeit für den nachfolgenden Ereignistyp E<β> 70 % (7 von 10 Vorkommen). Die zugehörige Komponente mit diesem Typ ist Komponente C. Wenn man also eine Schwellenwahrscheinlichkeit von 50 % annimmt, muss sie entsprechend aktiviert werden. Betrachtet man die nachfolgenden Ereignistypen für E<β>, dann hat der Ereignistyp E<ε> auf der Grundlage der anfänglichen Zählung von 10 Vorkommen von E<α> immer noch eine Wahrscheinlichkeit von 50 %, und die Komponente D muss aktiviert werden. Der Aktivierungsplan der Fig. 5 sieht also vor, dass die Komponenten C und D aktiviert werden müssen, wenn die Komponente A das Ereignis E<α> empfängt.

Das Modell von Fig. 4 und der Aktivierungsplan AP können fortlaufend, insbesondere auch während des Betriebs verbessert werden. Hierzu kann die Überwachungseinheit UE kontinuierlich Daten sammeln, wie oben beschrieben ist.

Wird ein Ereignistyp von der Komponente A empfangen, sucht die Starteinheit S den entsprechenden Aktivierungsplan und das Modell. Um die Komponenten C und D entsprechend des Aktivierungsplans zu aktivieren, kann die Starteinheit SE Aktivierungssignale AS an die entsprechenden Komponenten C und D senden, um sie in einen aktiven Zustand zu versetzen. Damit sollten sich die Komponenten bereits in einem aktiven Zustand befinden, wenn die aktuelle Verarbeitung in der Komponente A abgeschlossen ist und bevor die Komponenten C und D mit der Verarbeitung der Folgeereignisse beginnen.

Das oben beschriebene System und Verfahren sind in der Lage, Muster aus der Kommunikation zu lernen und die Auslastung der Komponenten vorherzusagen. Dadurch ist das System besser auf die verschiedenen Workflows vorbereitet, die während des Betriebs auftreten, wenn und bevor sie auftreten. Dies gilt beispielsweise auch für Workflows, die nicht häufig auftreten, aber zu einem vorhersehbaren Verhalten führen (z.B. bei der Fehlerbehandlung).

Obwohl die vorliegende Erfindung anhand von Ausführungsbeispielen beschrieben wurde, ist sie vielfältig modifizierbar.

## Patentansprüche

1. System (S) zum Aktivieren von Komponenten (A, B, C, D) vorgeschlagen, wobei das System (S) mehrere Komponenten (A, B, C, D) aufweist, wobei jede der mehreren Komponenten (A, B, C, D) dazu ausgebildet ist, zumindest eine Aufgabe auszuführen, wobei die Komponenten (A, B, C, D) des Weiteren dazu ausgebildet sind, mit anderen Komponenten (A, B, C, D) Nachrichten (E) auszutauschen, um die jeweiligen Aufgaben auszuführen, wobei das System (S) des Weiteren aufweist:
- eine Überwachungseinheit (UE), die dazu ausgebildet ist, den Austausch von Nachrichten (E) zwischen den mehreren Komponenten (A, B, C, D) zu überwachen, und
- eine Starteinheit (SE), die dazu ausgebildet ist, basierend auf dem Austausch von Nachrichten (E) ein Kommunikationsmuster zu detektieren, ein Verhalten der mehreren Komponenten (A, B, C, D) basierend auf dem Kommunikationsmuster vorherzusagen und basierend auf der Vorhersage eine oder mehrere Komponenten (A, B, C, D) in einen aktiven Zustand zu versetzen.

2. System nach Anspruch 1, **dadurch gekennzeichnet, dass** die Überwachungseinheit (UE) dazu ausgebildet ist, für eine Nachricht (E) einen Zeitpunkt einer Nachricht (E) und die aussendende Komponente (A, B, C, D) zu erkennen und zu speichern.

3. System nach Anspruch 2, **dadurch gekennzeichnet, dass** die Überwachungseinheit (UE) dazu ausgebildet ist, für die Nachricht (E) die empfangende Komponente (A, B, C, D) zu erkennen und zu speichern.

4. System nach Anspruch 2 oder 3, **dadurch gekennzeichnet, dass** die Überwachungseinheit (UE) dazu ausgebildet ist, einen Nachrichtentyp der Nachricht (E) zu erkennen und zu speichern.

5. System nach einem der vorhergehenden Ansprüche, **dadurch gekennzeichnet, dass** die Überwachungseinheit (UE) dazu ausgebildet ist, Nachrichten (E) von mehreren Komponenten (A, B, C, D) basierend auf Kausalitäten zu korrelieren und für eine Nachricht (E) eine eindeutige Identifikationsnummer der Nachricht und eine Kausalitätsidentifikationsnummer speichern, wobei die Kausalitätsidentifikationsnummer angibt, mit welcher Nachricht (E) die Nachricht (E) aufgrund einer Kausalität korreliert ist.

6. System nach einem der vorhergehenden Ansprüche, **dadurch gekennzeichnet, dass** die Starteinheit (SE) dazu ausgebildet ist, basierend auf dem Austausch von Nachrichten (E) ein Modell des Nachrichtenaustausches zwischen den mehreren Komponenten (A, B, C, D) zu erstellen.

7. System nach Anspruch 6, **dadurch gekennzeichnet, dass** die Starteinheit (SE) dazu ausgebildet ist, innerhalb der ausgetauschten Nachrichten (E) eine Häufigkeit des Auftretens von Nachrichten (E) zu detektieren und diese in das Modell zu integrieren, um das Kommunikationsmuster zu detektieren.

8. System nach Anspruch 6 oder 7, **dadurch gekennzeichnet, dass** die Starteinheit (SE) dazu ausgebildet ist, basierend auf dem Kommunikationsmuster zu bestimmen, welche Komponenten (A, B, C, D) an dem Kommunikationsmuster beteiligt sind, um das Verhalten der mehreren Komponenten (A, B, C, D) vorherzusagen.

9. System nach einem der Ansprüche 6 bis 8, **dadurch gekennzeichnet, dass** die Starteinheit (SE) dazu ausgebildet ist, die Nachrichten (E) über einen vordefinierten Zeitraum zu berücksichtigen, um das Modell zu erstellen.

10. System nach Anspruch 9, **dadurch gekennzeichnet, dass** die Starteinheit (SE) dazu ausgebildet ist, den Zeitraum basierend auf einer ausgewählten Genauigkeit der Vorhersage zu bestimmen.

11. System nach einem der vorhergehenden Ansprüche, **dadurch gekennzeichnet, dass** die Starteinheit (SE) dazu ausgebildet ist, basierend auf dem Kommunikationsmuster für jeden Nachrichtentyp einen Aktivierungsplan (AP) zum Aktivieren der Komponenten (A, B, C, D) zu erstellen und basierend auf dem Aktivierungsplan (AP) bei Auftreten eines Nachrichtentyps die entsprechenden Komponenten (A, B, C, D) zu aktivieren.

12. System nach Anspruch 11, **dadurch gekennzeichnet, dass** die Starteinheit (SE) dazu ausgebildet ist, basierend auf dem Aktivierungsplan (AP) die entsprechenden Komponenten (A, B, C, D) in einer festgelegten zeitlichen Reihenfolge zu aktivieren.

13. Verfahren zum Aktivieren von Komponenten (A, B, C, D) in einem System (S), wobei das System (S) mehrere Komponenten (A, B, C, D) aufweist, wobei jede der mehreren Komponenten (A, B, C, D) zumindest eine Aufgabe ausführt, wobei die Komponenten (A, B, C, D) mit anderen Komponenten (A, B, C, D) Nachrichten (E) austauschen, um die jeweiligen Aufgaben auszuführen, wobei das Verfahren die Schritte aufweist:
- Überwachen (S1) des Austauschs von Nachrichten (E) zwischen den mehreren Komponenten (A, B, C, D),
- Detektieren (S2) eines Kommunikationsmusters basierend auf dem Austausch von Nachrichten (E),
- Vorhersagen (S3) eines Verhaltens der mehreren Komponenten (A, B, C, D) basierend auf dem Kommunikationsmuster, und
- Aktivieren (S4) einer oder mehrerer Komponenten (A, B, C, D) basierend auf der Vorhersage des Verhaltens der mehreren Komponenten (A, B, C, D).

14. Computerprogrammprodukt, welches auf einer programmgesteuerten Einrichtung die Durchführung des Verfahrens gemäß Anspruch 13 veranlasst.
